# EUROPEAN PATENT APPLICATION

(11) **EP 4 529 324 A1**
(43) Date of publication of application: **26.03.2025**
(21) Application number: 23826065.7
(22) Date of filing: 24.05.2023
(51) Int. Cl.: H04W 72/0446, H04B 7/26

(54) **DATA TRANSMISSION METHOD AND APPARATUS**

(30) Priority: 22.06.2022 CN 202210710894
(71) Applicant: Huawei Technologies Co., Ltd., Shenzhen, Guangdong 518129 (CN)
(72) Inventor: ZHANG, Lun, Shenzhen, Guangdong 518129 (CN); YAN, Linzhi, Shenzhen, Guangdong 518129 (CN); NIE, Shiwei, Shenzhen, Guangdong 518129 (CN)
(74) Representative: Pfenning, Meinig & Partner mbB
(86) International application number: PCT/CN2023/096141
(87) International publication number: WO 2023/246416

(57) **Abstract**

A data transmission method and an apparatus are provided, to resolve a problem, in the conventional technology, that there is a high delay variation during data transmission. The method may be applied to an optical communication system, for example, a passive optical network PON system. The method includes: An optical line terminal OLT generates a data frame based on a frame structure; and sends the data frame to an optical network terminal ONT. One frame in the frame structure includes m subframes, one subframe includes n slices, a 1^{st} slice in the n slices is a first slice, a slice other than the first slice in the n slices is a second slice, the first slice includes a first slot, the second slice includes at least one second slot, the second slot has a fixed location and size in the frame structure, m is a positive integer, and n is an integer greater than 1. Bandwidth isolation may be implemented by using the slice included in the subframe, and the second slot with a fixed location and size may be reserved for service data of a high-priority service. A delay variation during data transmission of the high-priority service may be reduced by using the second slot with a fixed location and size.

## Description

This application claims priority to Chinese Patent Application No. 202210710894.8, filed with the China National Intellectual Property Administration on June 22, 2022 and entitled "DATA TRANSMISSION METHOD AND APPARATUS", which is incorporated herein by reference in its entirety.

### TECHNICAL FIELD

This application relates to the field of communication technologies, and in particular, to a data transmission method and an apparatus.

### BACKGROUND

With development of optical communication technologies, a passive optical network (passive optical network, PON) system is increasingly widely used. For example, the PON system may be used in a 5th generation (the 5th generation, 5G) bearer or a private line (for example, a bank private line or a military private line). All of these scenarios have a requirement for a low delay variation, and these scenarios have a high requirement for security isolation.

In an existing standard, when transmitting service data, the PON system needs to first encapsulate the service data into a data frame based on a frame structure, and then transmit the data frame. The frame structure includes a frame header and a payload, and the payload is used to carry service data. In specific transmission, the service data can be sent only after the frame header is sent. However, due to a non-fixed length of the frame header, a high delay variation is introduced to high-priority service data. In addition, if a length of a frame header of a frame is long, a delay variation of a subsequent frame is further increased.

In conclusion, how to reduce or eliminate the delay variation during data transmission is an urgent technical problem that needs to be currently resolved.

### SUMMARY

This application provides a data transmission method and an apparatus, to reduce or eliminate a delay variation during data transmission.

According to a first aspect, this application provides a data transmission method. The method includes: An optical head end generates a data frame based on a frame structure; and sends the data frame to an optical terminal. One frame in the frame structure includes m subframes, one subframe includes n slices, a 1^{st} slice in the n slices is a first slice, a slice other than the first slice in the n slices is a second slice, the first slice includes a first slot, the second slice includes at least one second slot, in other words, the second slice includes one second slot or includes a plurality of second slots, the second slot has a fixed location and size in the frame structure, m is a positive integer, and n is an integer greater than 1.

Based on the foregoing solution, one frame is divided into m subframes, and a subframe of an appropriate size may be more flexibly set based on a change of a value of m. The subframe of an appropriate size is set, so that a requirement of a slice queue for a buffer may be lowered. It should be understood that if m is set to an excessively small value, the queue has an excessively high depth, and a large buffer is required. If m is set to an excessively small value, because each subframe further needs to be divided into n slices, the slice is excessively small. Further, bandwidth isolation and exclusive use of bandwidth resources may be implemented by using the n slices in the subframe, so that a secure dedicated subnet may be formed. Further, the second slice includes the second slot with a fixed location and size, so that the second slot may be reserved for data of a high-priority service such as a private line service, and therefore a deterministic delay may be provided for the data of the high-priority service such as the private line service, that is, a delay variation during data transmission of the high-priority service such as the private line service may be reduced.

In a possible implementation, the second slice includes h second slots, h is an integer greater than 1, and the h second slots included in the second slice are consecutive slots or inconsecutive slots.

In a possible implementation, the first slice is used to carry first indication information, and the first indication information is used to separate the first slice from the second slice.

The first indication information is used, so that the optical terminal may quickly locate the second slice to which the optical terminal belongs.

Further, optionally, the first indication information is carried at a tail of the first slice.

The first indication information is carried at the tail of the first slice, so that compatibility with optical terminals in international telecommunication union telecommunication standardization sector (internatial telecommunication union telecommunication standardization sector, ITU-T) 984 and ITU-T 987 standards may be implemented, and the optical terminals in the ITU-T 984 and ITU-T 987 standards may directly skip the second slice and do not need to parse the second slice.

For example, the first indication information includes a gigabit-capable passive optical network encapsulation method (gigabit-capable passive optical network encapsulation mode, GEM) header in which a port identifier is a first preset value, or the first indication information includes a 10-gigabit-capable passive optical network encapsulation method (10 gigabit-capable passive optical network encapsulation mode, XGEM) header in which a port identifier is a second preset value.

The first indication information includes the GEM header or the XGEM header, so that the optical terminals in the ITU-T 984 and ITU-T 987 standards may also identify the first indication information.

Further, optionally, the first preset value and the second preset value may be pre-agreed on by the optical head end and the optical terminal, or specified in a protocol.

In a possible implementation, the first slice is further used to carry second indication information, and the second indication information indicates location information of the second slice.

In a possible implementation, h is an integer greater than 1; and if the second slice includes h inconsecutive second slots, the second indication information includes an identifier of the second slice and a start time and an end time of each of the h second slots; or the second indication information includes an identifier of the second slice and a start time and size information of each of the h second slots; or if the second slice includes h consecutive second slots, the second indication information includes an identifier of the second slice, a start time of a 1^{st} second slot in the h second slots, and an end time of an h^{th} second slot in the h second slots; or the second indication information includes an identifier of the second slice, a start time of a 1^{st} second slot in the h second slots, and size information of the second slice.

The location information of the second slice may be indicated by using the start time and the end time of the second slot included in the second slice or the start time and the size information of the second slot included in the second slice.

The following shows examples of three possible implementations of carrying the second indication information.

Manner 1: The second indication information is carried in a bandwidth map (bandwidth map, BWMAP).

In a possible implementation, the first slice is further used to carry a first subframe header, and the first subframe header includes a BWmap; and the BWmap carries the second indication information.

Manner 2: The second indication information is carried in a physical layer operations, administration and maintenance downstream (physical layer operations administration and maintenance downstream, PLOAMd) message.

In a possible implementation, the first slice is further used to carry a first subframe header, and the first subframe header includes a PLOAMd message; and the PLOAMd message carries the second indication information.

Manner 3: The first slice is further used to carry a first payload, and the first payload includes an optical network unit management and control interface (ONU Management and Control Interface, OMCI) message; and the OMCI message carries the second indication information.

In a possible implementation, if a sum of a length of the PLOAMd message and a length of the BWmap is greater than a preset length, the PLOAMd message and/or the BWmap are/is fragmented and carried in a first slice included in a first subframe and a first slice included in a second subframe, the first subframe is one of the m subframes, and the second subframe is adjacent to the first subframe.

The first subframe header is fragmented and carried, so that a case in which the BWmap and the PLOAMd message cannot be completely carried in a subframe header can be avoided, and a first packet and/or a second packet can be sent without a need to wait until the first subframe header is completely sent, to reduce a delay variation caused by the first subframe header and help reduce a transmission delay of the first subframe header for data of a real-time service such as a private line service.

For example, the first subframe is a 1^{st} subframe in the m subframes, and the second subframe is a 2^{nd} subframe in the m second subframes. Further, a sum of a length of a PLOAMd message and a length of a BWmap that are carried in the first slice included in the 1^{st} subframe is equal to the preset length, and a sum of a length of a PLOAMd message and a length of a BWmap that are carried in the first slice included in the 2^{nd} subframe is less than or equal to the preset length.

Based on this, the first subframe header may be quickly transmitted.

In a possible implementation, a 1^{st} second slice in the 1^{st} subframe in the m subframes is further used to carry a second subframe header.

The second subframe header is used, so that during cross-frame transmission, the second packet is separated, to avoid a case in which data recovery and reassembly of a second slice in a subsequent subframe are affected because a bit error occurs and a current subframe cannot be recovered.

According to a second aspect, this application provides a data transmission method, including: An optical terminal receives a data frame from an optical head end; and parses the data frame. One frame in a frame structure includes m subframes, one subframe includes n slices, a 1^{st} slice in the n slices is a first slice, a slice other than the first slice in the n slices is a second slice, the first slice includes a first slot, the second slice includes at least one second slot, the second slot has a fixed location and size in the frame structure, m is a positive integer, and n is an integer greater than 1.

In a possible implementation, the second slice includes h second slots, the h second slots are consecutive slots or inconsecutive slots, and h is an integer greater than 1.

In a possible implementation, the first slice is used to carry first indication information, and the first indication information is used to separate the first slice from the second slice.

In a possible implementation, the first indication information is carried at a tail of the first slice.

In a possible implementation, the first indication information includes a gigabit-capable passive optical network encapsulation method GEM header in which a port identifier is a first preset value, or includes a 10-gigabit-capable passive optical network encapsulation method XGEM header in which a port identifier is a second preset value.

In a possible implementation, the first slice is further used to carry second indication information, and the second indication information indicates location information of the second slice.

In a possible implementation, h is an integer greater than 1; and if the second slice includes h inconsecutive second slots, the second indication information includes an identifier of the second slice and a start time and an end time of each of the h second slots; or the second indication information includes an identifier of the second slice and a start time and size information of each of the h second slots; or if the second slice includes h consecutive second slots, the second indication information includes an identifier of the second slice, a start time of a 1^{st} second slot in the h second slots, and an end time of an h^{th} second slot in the h second slots; or the second indication information includes an identifier of the second slice, a start time of a 1^{st} second slot in the h second slots included in the second slice, and size information of the second slice.

In a possible implementation, the first slice is further used to carry a first subframe header, and the first subframe header includes a physical layer operations, administration and maintenance downstream PLOAMd message or a bandwidth map BWmap; and the PLOAMd message or the BWmap carries the second indication information.

In a possible implementation, if a sum of a length of the PLOAMd message and a length of the BWmap is greater than a preset length, the PLOAMd message and/or the BWmap are/is fragmented and carried in a first slice included in a first subframe and a first slice included in a second subframe, the first subframe is one of the m subframes, and the second subframe is adjacent to the first subframe.

In a possible implementation, the first subframe is a 1^{st} subframe in the m subframes, and the second subframe is a 2^{nd} subframe in the m second subframes.

In a possible implementation, the first slice is further used to carry a first payload, and the first payload includes an optical network unit management and control interface OMCI message; and the OMCI message carries the second indication information.

In a possible implementation, a 1^{st} second slice in the 1^{st} subframe in the m subframes is further used to carry a second subframe header.

According to a third aspect, this application provides a communication apparatus. The communication apparatus is configured to implement the method in any one of the first aspect or the possible implementations of the first aspect, or is configured to implement the method in any one of the second aspect or the possible implementations of the second aspect, and includes corresponding functional modules, respectively configured to implement the steps in the foregoing method. The function may be implemented by hardware, or may be implemented by executing corresponding software by hardware. The hardware or software includes one or more modules corresponding to the foregoing function.

In a possible implementation, the communication apparatus may be an optical head end, or a module that can be used in an optical head end, for example, a chip, a chip system, or a circuit. For beneficial effects, refer to the descriptions of the first aspect. Details are not described herein. The communication apparatus may include an interface circuit and a processor. The processor is configured to implement a corresponding function in the first aspect through a logic circuit or by executing code instructions. The interface circuit is configured to: receive a signal from a communication apparatus other than the communication apparatus, and transmit the signal to the processor, or send a signal from the processor to a communication apparatus other than the communication apparatus. The interface circuit may be an independent receiver, an independent transmitter, or a transceiver integrated with a transceiver function. Optionally, the communication apparatus may further include a memory. The memory may be coupled to the processor, and the memory stores program instructions and data that are necessary for the communication apparatus.

The processor is configured to generate a data frame based on a frame structure, where one frame in the frame structure includes m subframes, one subframe includes n slices, a 1^{st} slice in the n slices is a first slice, a slice other than the first slice in the n slices is a second slice, the first slice includes a first slot, the second slice includes at least one second slot, the second slot has a fixed location and size in the frame structure, m is a positive integer, and n is an integer greater than 1; and the interface circuit is configured to send the data frame to an optical terminal.

In another possible implementation, the communication apparatus may be an optical terminal, or a component that can be used in an optical terminal, for example, a chip, a chip system, or a circuit. For beneficial effects, refer to the descriptions of the second aspect. Details are not described herein. The communication apparatus may include an interface circuit and a processor. The processor is configured to implement a corresponding function in the first aspect through a logic circuit or by executing code instructions. The interface circuit is configured to: receive a signal from a communication apparatus other than the communication apparatus, and transmit the signal to the processor, or send a signal from the processor to a communication apparatus other than the communication apparatus. The interface circuit may be an independent receiver, an independent transmitter, or a transceiver integrated with a transceiver function. Optionally, the communication apparatus may further include a memory. The memory may be coupled to the processor, and the memory stores program instructions and data that are necessary for the communication apparatus.

The interface circuit is configured to receive a data frame from an optical head end; and the processor is configured to parse the data frame.

According to a fourth aspect, this application provides a communication apparatus. The communication apparatus is configured to implement the method in any one of the first aspect or the possible implementations of the first aspect, or is configured to implement the method in any one of the second aspect or the possible implementations of the second aspect, and includes corresponding functional modules, respectively configured to implement the steps in the foregoing method. The function may be implemented by hardware, or may be implemented by executing corresponding software by hardware. The hardware or software includes one or more modules corresponding to the foregoing function.

In a possible implementation, the communication apparatus may be an optical head end. The communication apparatus may include a processing module and a transceiver module. The modules may perform corresponding functions of the optical head end in the foregoing method example. For details, refer to the detailed descriptions in the method example. Details are not described herein.

In another possible implementation, the communication apparatus may alternatively be an optical terminal. The communication apparatus may include a transceiver module and a processing module. The modules may perform corresponding functions of the optical terminal in the foregoing method example. For details, refer to the detailed descriptions in the method example. Details are not described herein.

According to a fifth aspect, this application provides a communication system. The communication system includes an optical head end and an optical terminal. The optical head end may be configured to perform the method in any one of the first aspect or the possible implementations of the first aspect. The optical terminal may be configured to perform the method in any one of the second aspect or the possible implementations of the second aspect.

According to a sixth aspect, this application provides a chip, including at least one processor and an interface circuit. Further, optionally, the chip may further include a memory. The processor is configured to execute a computer program or instructions stored in the memory, to enable the chip to perform the method in any one of the first aspect or the possible implementations of the first aspect, or to enable the chip to perform the method in any one of the second aspect or the possible implementations of the second aspect.

According to a seventh aspect, this application provides a computer-readable storage medium. The computer-readable storage medium stores a computer program or instructions. When the computer program or the instructions are executed by a communication apparatus, the communication apparatus is enabled to perform the method in any one of the first aspect or the possible implementations of the first aspect, or the communication apparatus is enabled to perform the method in any one of the second aspect or the possible implementations of the second aspect.

According to an eighth aspect, this application provides a computer program product. The computer program product includes a computer program or instructions. When the computer program or the instructions are executed by a communication apparatus, the communication apparatus is enabled to perform the method in any one of the first aspect or the possible implementations of the first aspect, or the communication apparatus is enabled to perform the method in any one of the second aspect or the possible implementations of the second aspect.

For technical effects that can be achieved in any one of the second aspect to the eighth aspect, refer to the descriptions of beneficial effects in the first aspect. Details are not described herein.

### BRIEF DESCRIPTION OF DRAWINGS

FIG. 1 is a schematic diagram of a system architecture of an optical communication system according to this application;
FIG. 2 is a schematic diagram of a structure of an FS frame structure according to this application;
FIG. 3 is a schematic flowchart of a data transmission method according to this application;
FIG. 4 is a schematic diagram of a structure of a frame structure according to this application;
FIG. 5a is a schematic diagram of a structure of an XGEM frame according to this application;
FIG. 5b is a schematic diagram of a structure of a GEM frame according to this application;
FIG. 6 is a schematic diagram of a structure of a first slice according to this application;
FIG. 7a is a schematic diagram of a structure of a second slice according to this application;
FIG. 7b is a schematic diagram of a structure of another second slice according to this application;
FIG. 8 is a schematic diagram of a structure of a GTC frame according to this application;
FIG. 9 is a schematic diagram of a structure of a BWmap according to this application;
FIG. 10 is a schematic diagram of a structure of a PLOAM message according to this application;
FIG. 11 is a schematic diagram of a structure of another frame structure according to this application;
FIG. 12 is a schematic flowchart of a method for negotiating location information of a second slice and a frame number to be enabled for the second slice according to this application;
FIG. 13 is a schematic diagram of a structure of a communication apparatus according to this application; and
FIG. 14 is a schematic diagram of a structure of a communication apparatus according to this application.

### DESCRIPTION OF EMBODIMENTS

The following describes in detail embodiments of this application with reference to accompanying drawings.

Some terms in this application are described below. It should be noted that these explanations are for ease of understanding by a person skilled in the art, and are not intended to limit the protection scope claimed by this application.

### 1. Byte and bit

The byte (byte) is a measurement unit used in computer information technology to measure a storage capacity. Usually, data storage is measured in bytes (byte), and data transmission is mostly measured in bits (bit, also referred to as "bit"). One bit represents a 0 or 1 (that is, binary), and every 8 bits (bit, b) form a byte (byte, B).

### 2. Hard slot

The hard slot is a slot with a fixed location and size in a frame structure.

### 3. Transmission container (transmission container, T-CONT)

The T-CONT is a most basic control unit of upstream bandwidth in a gigabit-capable passive optical network (gigabit-capable PON, GPON) system. Each T-CONT is uniquely identified by an allocation identifier (Alloc-ID). The Alloc-ID is allocated by an OLT to each GPON port. That is, ONUs at a same GPON port of the OLT do not have T-CONTs with a same Alloc-ID.

### 3. GPON encapsulation method (GPON encapsulation mode, GEM)

The GEM is a method for encapsulating data in a GPON.

### 4. XGEM frame (frame)

The XGEM frame is a smallest service bearer unit in a 10-gigabit-capable passive optical network (10 gigabit-capable passive optical network, XGPON) system, and is a most basic encapsulation structure. Service data needs to be encapsulated into the XGEM frame for transmission.

The foregoing describes some terms used in this application. The following describes a system architecture to which this application may be applied.

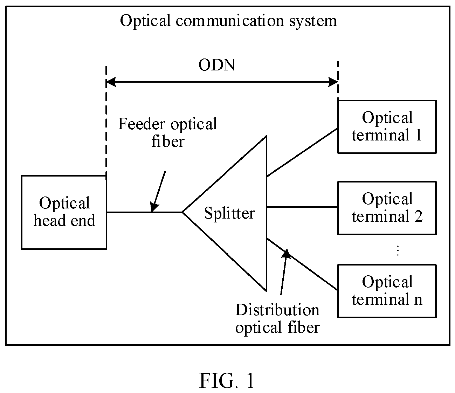

FIG. 1 is a schematic diagram of a system architecture of an optical communication system to which this application is applicable. For example, the optical communication system includes an optical head end, an optical distribution network (optical distribution network, ODN), and an optical terminal. The optical head end is connected to the optical terminal through the ODN. In FIG. 1, an example in which the optical communication system includes n optical terminals is used. The n optical terminals are respectively an optical terminal 1, an optical terminal 2, ..., and an optical terminal n. The optical head end may be, for example, an optical line terminal (optical line terminal, OLT), and the OLT is a central office device. The optical terminal may be, for example, an optical network terminal (optical network terminal, ONT) or an optical network unit (optical network unit, ONU). The ONT or the ONU is an end unit in the PON system, and is also referred to as an "optical modem". That is, the OLT may implement a function of the optical head end in this application, and the ONT or the ONU may implement a function of the optical terminal in this application. The ODN includes a feeder optical fiber, a splitter (splitter) (or referred to as an optical splitter), and a distribution optical fiber. The splitter is an optical fiber junction device having a plurality of input ends and a plurality of output ends, and is configured to couple and distribute optical signals. The optical head end is connected to the splitter through the feeder optical fiber, and the splitter is connected to the optical terminal through the distribution optical fiber.

Based on FIG. 1, a transmission direction in which data (or a signal) is transmitted from the optical head end to the optical terminal is referred to as a downstream direction, and a direction in which data (or a signal) is transmitted from the optical terminal to the optical head end is referred to as an upstream direction. A manner in which the optical head end transmits data (or a signal) to the optical terminal may be broadcast, and a manner in which the optical terminal transmits data (or a signal) to the optical head end may be unicast. It should be understood that in the upstream direction, the PON system is a multipoint-to-point (multi-point to point, MP2P) system; and in the downstream direction, the PON system is a point-to-multipoint (point 2 multiple point, P2MP) system.

It should be noted that the optical head end, the optical terminal, the splitter, and a quantity of ports included in the splitter that are shown in FIG. 1 in the optical communication system are merely examples. This is not limited in this application. In addition, a name of each structure in the optical communication system shown in FIG. 1 is merely an example. During specific implementation, the name of each structure may be another name. This is not specifically limited in this application.

The optical communication system may be, for example, a passive optical network (passive optical network, PON) system. The PON system may be, for example, a gigabit-capable passive optical network (gigabit-capable PON, GPON) system, an Ethernet passive optical network (ethernet PON, EPON) system, a 10 Gb/s Ethernet passive optical network (10 Gb/s ethernet passive optical network, 10G-EPON) system, a time and wavelength division multiplexing passive optical network (time and wavelength division multiplexing passive optical network, TWDM-PON), a 10-gigabit-capable passive optical network (10 gigabit-capable passive optical network, XGPON) system, a 10-gigabit-capable symmetric passive optical network (10-gigabit-capable symmetric passive optical network, XGS-PON) system, a 25-gigabit-capable passive optical network (25 gigabit-capable passive optical network, 25-PON) system, or a 50-gigabit-capable passive optical network (50 gigabit-capable passive optical network, 50-PON) system. With emergence of a future evolved new technology, a rate of the PON system may be increased to 100 Gbps or even higher. Therefore, the optical communication system may alternatively be a PON system with a higher transmission rate. This is not limited in this application.

The PON system may be used in an industrial scenario, for example, may be used as a network bearer infrastructure to implement comprehensive access to service applications such as an industrial production line service, an office network, video surveillance, an access control system, production management, an external network, or an internal network. To meet requirements of various services for network resources and necessary requirements such as rights- and domain-based management and security isolation, the optical head end needs to have a network slicing capability. This may be understood as that one physical optical head end may be virtualized into a plurality of logical optical head ends (equivalent to a plurality of independent physical devices for a user) that respectively carry various services. Network resources, operation and maintenance management permission, services, and the like between slices do not interfere with each other, so that a balance between reliability, security, and network resources may be effectively achieved.

For ease of description, in the following descriptions of this application, an example in which the optical head end is an OLT and the optical terminal is an ONT is used for description. In other words, in the following descriptions of this application, the OLT may be replaced with the optical head end, and the ONT may be replaced with the optical terminal.

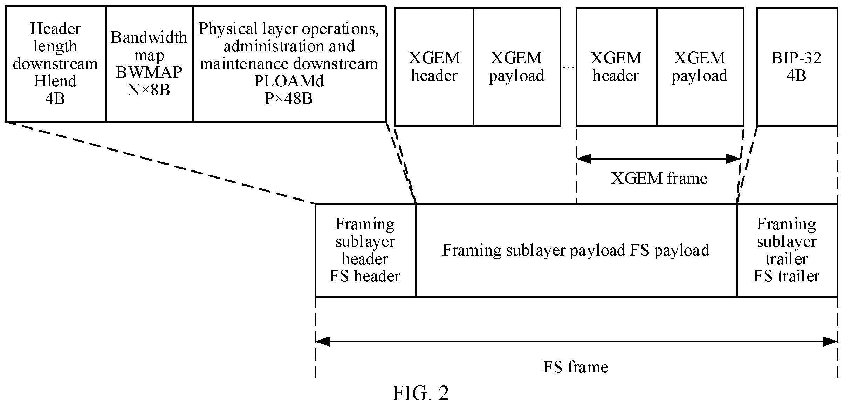

During transmission of service data, the service data needs to be encapsulated based on a frame format. An XGS-PON system is used as an example. In a downstream direction, when sending service data, the XGS-PON system needs to encapsulate the service data into an XGEM frame for transmission. A plurality of XGEM frames form a frame sublayer (framing sublayer, FS) payload (payload). The FS payload, an FS header (header), and an FS trailer (trailer) form an FS frame, as shown in FIG. 2. The FS payload is used to carry service data. The FS header includes a header length downstream (header length downstream, Hlend), a BWmap, and a PLOAMd message. A length of an Hlend message is 4 bytes (that is, 4B). A length of the BWmap is N×8 bytes (that is, N×8B), where N is a quantity of T-CONTs (that is, a quantity of BWmaps) and varies. A length of the PLOAMd message is P×48 bytes (that is, P×48B), where P is a quantity of PLOAMd messages. A quantity of PLOAMd messages actually delivered in each FS frame also varies. In each FS frame, sending of service data can be started only after the FS header is sent. For the XGS-PON, a length of the FS header is equal to 4+8×N+48×P. Usually, a total length of the BWmap and the PLOAMd message ranges from tens of bytes to thousands of bytes. Therefore, the length of the FS header is not fixed, and a delay variation is introduced to the sent service data. In addition, the service data is encapsulated into an XGEM frame, and a next XGEM frame can be sent only after a current XGEM frame is sent. If the current XGEM frame (for example, a jumbo frame) is not completely sent, the next XGEM frame needs to wait, and consequently a high delay is introduced. In particular, for a high-priority service such as a private line service, preemption can be performed only at a boundary of the XGEM frame, and a maximum waiting delay is a packet length divided by line bandwidth. For example, if downstream bandwidth of the XGS-PON is 9.95 gigabits per second (Gbps), and effective bandwidth is 8.67 Gbps after forward error control (forward error conrol, FEC) is enabled, a maximum delay variation of 9216B ×8÷8.67 Gbps=8.5 microseconds (us) is introduced for service data with a length of 9216B. If a large quantity of BWmaps and PLOAM messages are sent, a higher delay variation is introduced.

In view of the foregoing problem, this application provides a data transmission method. In the data transmission method, a second slot with a fixed location and size may be reserved for data of a high-priority service such as a private line service, and therefore a deterministic delay may be provided for the data of the high-priority service such as the private line service, that is, a delay variation during data transmission of the high-priority service such as the private line service may be reduced.

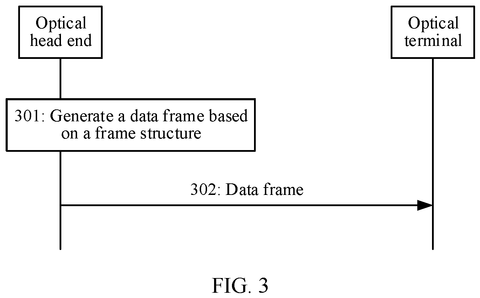

Based on the foregoing content, the data transmission method provided in this application is described below in detail with reference to FIG. 3 to FIG. 12.

FIG. 3 is a schematic flowchart of a data transmission method according to this application. The data transmission method may be applied to the communication system shown in FIG. 1. An optical head end may be the optical head end in FIG. 1, and an optical terminal may be any one of the optical terminal 1, the optical terminal 2, ..., and the optical terminal n in FIG. 1. The data transmission method may include the following steps.

Step 301: The optical head end generates a data frame based on a frame structure.

One frame in the frame structure includes m subframes (the subframe may also be referred to as a multiframe), and m is an integer greater than or equal to 1. In other words, one frame may include one subframe, or may include a plurality of subframes. Further, one subframe includes n slices (slice), a 1^{st} slice in the n slices is a first slice (or referred to as a default slice), a slice other than the first slice in the n slices is a second slice, and n is an integer greater than 1. For example, if n is equal to 2, one subframe includes one first slice and one second slice. For another example, if n is equal to 3, one subframe includes one first slice and two second slices. For another example, if n is equal to 4, one subframe includes one first slice and three second slices. Examples are not listed herein. The first slice includes a first slot, and the first slot may also be referred to as a common slot. One second slice includes at least one second slot, and each second slot has a fixed location and size. The second slot may also be referred to as a hard slot, and the corresponding second slice may also be referred to as a hard slice.

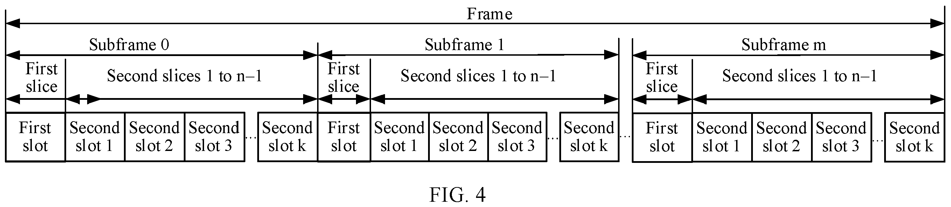

With reference to FIG. 4, one frame includes m subframes, where an example in which m is an integer greater than 1 is used, and one subframe includes n slices, where an example in which n is an integer greater than 2 is used. That is, one subframe includes a subframe 0, a subframe 1, ..., and a subframe m, and one subframe includes a first slice (slice 0), a second slice 1 (slice 1), ..., and a second slice n-1 (slice (n-1)). In FIG. 4, an example in which the n-1 second slices correspond to k second slots is used. For more detailed structures of the first slice and the second slice, refer to the following descriptions. Details are not described herein.

In a possible implementation, a PON system may simultaneously execute a plurality of services, and different services may have different quality of service (quality of service, QoS) requirements. Different slices may carry service data with different QoS requirements. For example, the first slot is used to carry a first packet, the second slot is used to carry a second packet, and a delay variation requirement of the second packet is higher than a delay variation requirement of the first packet. The first slice or the second slice may carry service data of different users. This may be understood as that a subframe is divided into a common slot and a time division multiplexing (time-division multiplexing, TDM) slot. The common slot may be compatible with an ONU or an ONT in an existing PON standard, and the first packet is transmitted on arrival. The TDM slot supports service data that needs to be transmitted in a fixed slot, for example, service data of a service with a low delay variation.

For example, one frame may be 125 microseconds (us), the frame may also be referred to as a super frame, and one subframe is 125 µs/m.

Step 302: The optical head end sends the data frame to the optical terminal. Correspondingly, the optical terminal receives the data frame from the optical head end.

In a possible implementation, the optical head end may send the data frame to the optical terminal through an ODN.

It may be learned from step 301 and step 302 that one frame is divided into m subframes, and a subframe of an appropriate size may be more flexibly set based on a change of a value of m. The subframe of an appropriate size is set, so that a requirement of a slice queue for a buffer may be lowered. It should be understood that if m is set to an excessively small value, the queue has an excessively high depth, and a large buffer is required. If m is set to an excessively small value, because each subframe further needs to be divided into n slices, the slice is excessively small. Further, bandwidth isolation and exclusive use of bandwidth resources may be implemented by using the n slices in the subframe, so that a secure dedicated subnet may be formed. Further, the second slice includes the second slot with a fixed location and size, so that the second slot may be reserved for data of a high-priority service such as a private line service, and therefore a deterministic delay may be provided for the data of the high-priority service such as the private line service, that is, a delay variation during data transmission of the high-priority service such as the private line service may be reduced.

The following describes structures of the first slice and the second slice in detail.

### 1. First slice

In a possible implementation, the first slice is used to carry first indication information, and the first indication information is used to separate the first slice from the second slice. This may be understood as that the first indication information is a separator between the first slice and the second slice. For example, the first indication information may include a GEM header (GH) in which a port identifier (port ID) is a first preset value, where the GH may be referred to as a special GH, or include an XGEM header (XGH) in which a port identifier (port ID) is a second preset value, where the XGH may be referred to as a special XGH.

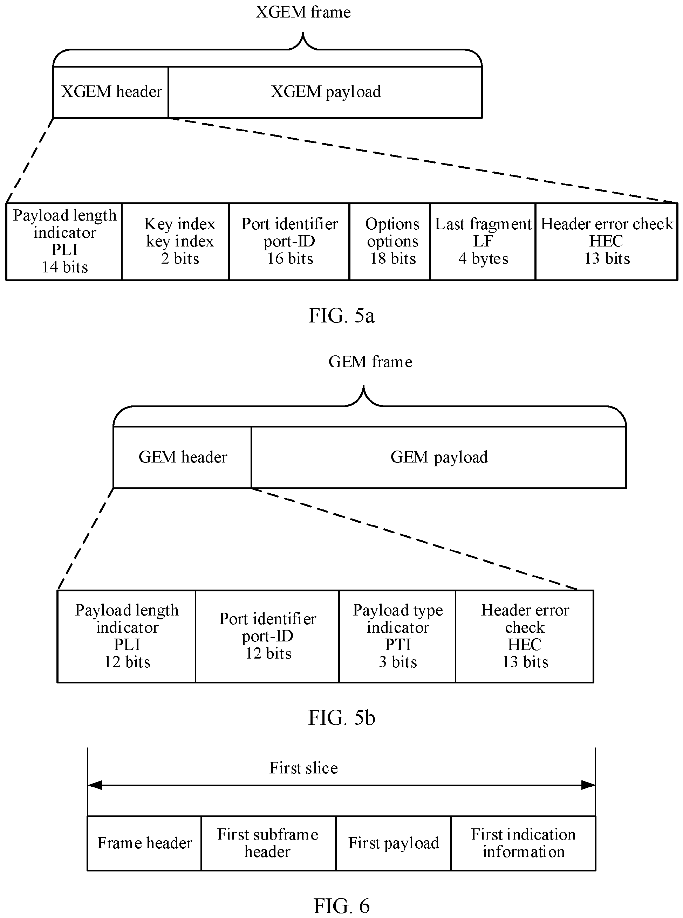

FIG. 5a is a schematic diagram of a structure of an XGEM frame according to this application. The XGEM frame includes an XGEM payload (payload) and an XGEM header (header). The XGEM header includes a payload length indicator (payload length indicator, PLI), a key index (key index), a port identifier (Port ID), options (options), a last fragment (last fragment, LF), and header error check (head error check, HEC). The PLI indicates a length of the XGEM payload. The PLI includes 14 bits. The 14 bits may indicate that a maximum length of the XGEM payload is 2^14=16384 bytes. The PLI may be considered as a pointer to indicate and find a next XGEM header. The Port-ID indicates a port at which the XGEM frame is located. The Port-ID including 16 bits (16 bits) may provide 2^16=65536 different port identifiers. Usually, the OLT configures a service package for each user, generates a service flow, and configures a Port-ID for each service flow to identify the service flow. The service flow does not occupy all of the 65536 Port-IDs, and one or more Port-IDs may be reserved to be the second preset value, so that the XGEM header is used as the first indication information. For example, the Port-ID may be reserved to be 65534, so that the XGEM header may be used as the first indication information. It should be noted that a specific value or values that are used as the Port-ID and that are used to identify that the XGEM header is the first indication information may be pre-agreed on by the ONT and the OLT or specified in a protocol. This is not limited in this application. The key index includes 2 bits, and represents a key index used for encrypting the XGEM payload. The LF includes 4 bytes (4 bytes), and indicates whether there is a last fragment of the XGEM frame. If there is the last fragment, the LF field is 1. If there is not the last fragment, the LF field is 0. The options (options) field includes 18 bits. The HEC field is used for error detection and error correction of the XGEM header.

FIG. 5b is a schematic diagram of a structure of a GEM frame according to this application. The GEM frame includes a GEM payload (payload) and a GEM header (header). The GEM header includes a PLI, a port ID, a payload type indicator (payload type indicator, PTI), and HEC. The PLI includes 12 bits. In the PTI, a most significant bit indicates whether the GEM frame is operations, administration and maintenance (operations, administrations and maintenance, OAM) information, a second most significant bit indicates whether user data is congested, a least significant bit indicates whether there is a last fragment of the frame in a fragmentation mechanism, and when there is a value of 1, it indicates the last fragment of the frame. The HEC field includes 13 bits. The port ID includes 12 bits, and 4096 different ports may be provided. One or more port-IDs may be reserved to be the first preset value, so that the GEM header is used as the first indication information. For functions of the PLI, the Port-ID, and the HEC field, refer to the descriptions in FIG. 5a. Details are not described herein.

In a possible implementation, the first indication information may be set at a tail of the first slice, as shown in FIG. 6. This may be understood as that the first indication information is set in location information that is in the first slice and that is close to the second slice. It may be understood that because a length of a frame is fixed, and impact is exerted by a bandwidth size of the n-1 second slices, location information of the first indication information may move. For example, if bandwidth of the n-1 second slices is high, the first indication information may move in a direction toward a frame header. For another example, if bandwidth of the n-1 second slices is low, the first indication information may move in a direction toward the second slice.

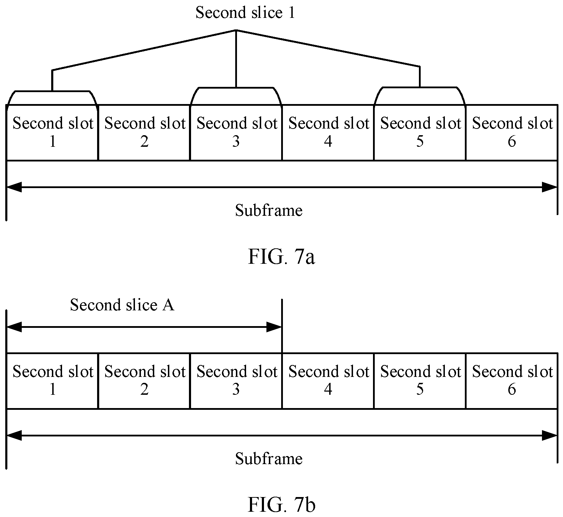

Further, optionally, the first slice is further used to carry second indication information, and the second indication information indicates location information of the second slice. Specifically, if the second slice includes h inconsecutive second slots, the second indication information includes an identifier of the second slice and a start time and an end time of each of the h second slots; or the second indication information includes an identifier of the second slice and a start time and size information of each of the h second slots. For example, with reference to FIG. 7a, if a second slice 1 includes three inconsecutive second slots: a second slot 1, a second slot 3, and a second slot 5, the second indication information includes an identifier 1 of the second slice, a start time and an end time of the second slot 1, a start time and an end time of the second slot 3, and a start time and an end time of the second slot 5; or the second indication information includes an identifier 1 of the second slice, a start time and a size of the second slot 1, a start time and a size of the second slot 3, and a start time and a size of the second slot 5.

If the second slice includes h consecutive second slots, the second indication information includes an identifier of the second slice, and a start time of a 1^{st} second slot and an end time of an h^{th} second slot (that is, a last second slot) that are in the h second slots; or the second indication information includes an identifier of the second slice, a start time of a 1^{st} second slot in the h second slots, and size information of the second slice. For example, with reference to FIG. 7b, if a second slice A includes three consecutive second slots: a second slot 1, a second slot 2, and a second slot 3, the second indication information includes an identifier A of the second slice, a start time of the second slot 1, and an end time of the second slot 3; or the second indication information includes an identifier 1 of the second slice, a start time of the second slot 1, and size information of the second slice.

In a possible implementation, the second indication information may be carried in a first subframe header in the first slice or a first payload in the first slice. The following provides descriptions in different cases.

Case 1: The second indication information is carried in the first subframe header.

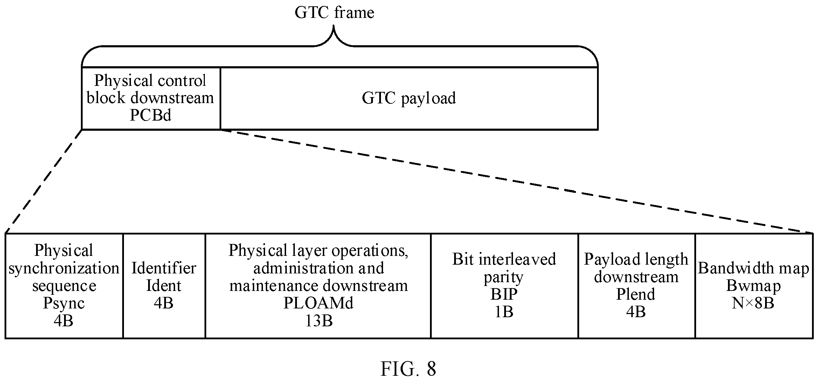

In a possible implementation, the first slice is further used to carry the first subframe header. There are some differences in a used frame header format (or referred to as a frame header structure) in different PON standards. For example, in a standard such as an XG-PON, an XGS-PON, a 25G-PON, or a 50G-PON, the first subframe header may be a framing sublayer header, as shown in FIG. 2. Details are not described herein. For another example, in a GPON standard, there is a GTC frame. With reference to FIG. 8, a frame header of the GTC frame is a physical control block downstream (physical control block downstream, PCBd), and the first subframe header may be the PCBd. The PCBd includes a physical synchronization sequence (physical synchronization sequence, Psync), an identifier (ident), a PLOAMd message, bit interleaved parity (bit interleaved parity, BIP), a payload length downstream (payload length downstream, Plend), and a BWmap.

The following shows examples of two possible manners of carrying the second indication information.

Manner 1: The second indication information is carried in a BWmap.

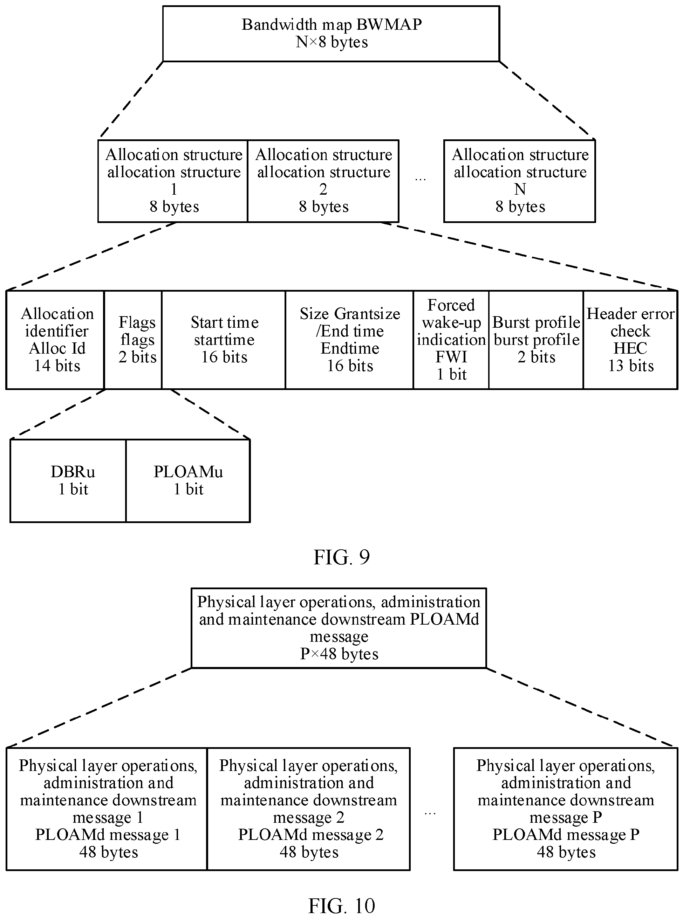

In a possible implementation, the first subframe header includes a BWmap, and the second indication information may be carried in the BWmap. With reference to FIG. 9, the BWmap includes N 8-byte allocation structures (allocation structure), and each allocation structure includes an allocation identifier (Alloc ID), flags (flags), a start time (starttime), a size (grantsize) or an end time (endtime), a forced wake-up indication (forced wake-up indication, FWI), a burst profile (burst profile), and HEC. The Alloc ID may uniquely identify a receiver of bandwidth allocation, and one Alloc ID corresponds to one slice. The Alloc ID including 16 bits may represent 2^16=65536 slices, and one or more Alloc IDs that are third preset values may be reserved to indicate the second slice. For example, if a subframe includes eight second slices, eight Alloc IDs that are eight different third preset values may be reserved to respectively represent the eight second slices included in the subframe. Eight specific Alloc IDs to be reserved may be pre-agreed on by the ONT and the OLT or specified in a protocol. This is not limited in this application. The flags field includes indicators related to an upstream transmission function, for example, a dynamic bandwidth report upstream (dynamic bandwidth report upstream, DBRu) and physical layer OAM upstream (PLOAMu). The flags field indicates some functional structures of an uplink burst. Herein, starttime indicates a start time of the second slot included in the second slice, grantsize indicates a size of the second slot included in the second slice, and endtime indicates an end time of the second slot included in the second slice. The FWI is used to wake up an ONT whose power is saved. The burst profile includes an index of a burst profile to be used by an ONT adaptation layer to form a physical interface (physical interface, PHY) burst. The PLOAMu is used to carry upstream PLOAM information. The DBRu is used to report a related information payload field.

Based on the manner 1, the identifier of the second slice included in the second indication information may be sent to the ONT by using a PLOAMd message or an OMCI message.

It should be noted that the second indication information may be carried in one or more of the N allocation structures. If the second slice includes h consecutive second slots, the second indication information may be carried in any one of the N allocation structures. If the second slice includes h second slots that are all inconsecutive, the second indication information is carried in h of the N allocation structures. If in the h inconsecutive second slots included in the second slice, some second slots are consecutive and some second slots are inconsecutive, a quantity of allocation structures in which the second indication information is carried is greater than 1 and less than or equal to h. The consecutive second slots may be carried in a same allocation structure, or may be carried in different allocation structures.

Manner 2: The second indication information is carried in a PLOAMd message (massage).

With reference to FIG. 2, the first subframe header further includes a PLOAMd message, and the second indication information may be carried in the PLOAMd message. With reference to FIG. 10, the first subframe header includes P PLOAMd messages, one PLOAMd message includes 48 bytes, and P is an integer greater than 1. Table 1 shows a PLOAMd message that carries the second indication information according to this application.

It should be noted that the second indication information may be carried in one or more of the P PLOAMd messages. If the second slice includes h consecutive second slots, the second indication information may be carried in any one of the P PLOAMd messages. If the second slice includes h second slots that are all inconsecutive, the second indication information is carried in h of the P PLOAMd messages. If in the h inconsecutive second slots included in the second slice, some second slots are consecutive and some second slots are inconsecutive, a quantity of PLOAMd messages in which the second indication information is carried is greater than 1 and less than or equal to h. The consecutive second slots may be carried in a same PLOAMd message, or may be carried in different PLOAMd messages.

**Table 1 PLOAMd message that carries the second indication information**

| Byte | Parameter | Description |
|---|---|---|
| 1 | ONU ID | Indicates an ONU that sends an Ext_SLICE_ALLOCATION message |
| 2 | 250 | Indicates that the message is an Ext_SLICE_ALLOCATION message |
| 3 and 4 | Slice identifier (Slice-ID) | Indicates the identifier of the second slice, and includes 16 bits |
| 5 and 6 | Start time (StartTime) | Indicates the start time of the second slot included in the second slice, and includes 16 bits |
| 7 and 8 | Size (GrantSize)/End time (Endtime) | Indicates the size/end time of the second slot included in the second slice, and includes 16 bits |
| 9- | Reserved | |

Based on Table 1, the identifier of the second slice included in the second indication information may be represented by using the third byte and the fourth byte in the PLOAMd message, the start time of the second slot is represented by using the fifth byte and the sixth byte in the PLOAMd message, and the size of the second slot or the end time of the second slot is represented by using the seventh byte and the eighth byte in the PLOAMd message. It may be understood that quantities of bits, in the PLOAM message, that are occupied by the identifier of the second slice, the start time of the second slot included in the second slice, and the size/end time of the second slot that are included in the second indication information and that are provided in Table 1 are merely examples. This is not limited in this application.

It should be noted that definitions of the third byte to the eighth byte may be different in different PLOAMd messages.

Case 2: The second indication information is carried in the first payload.

In a possible implementation, the first payload includes an OMCI message, and the second indication information is carried in the OMCI message. Table 2 shows an OMCI message that carries the second indication information according to this application.

**Table 2 OMCI message that carries the second indication information**

| Parameter | Description |
|---|---|
| Managed entity name managed entity name | Extend slice allocation config |
| Managed entity class value managed entity class value | 0xxx |
| Managed entity ID managed entity ID | Is used to uniquely identify the managed entity ME |
| Slice identifier (Slice-ID) | Indicates the identifier of the second slice, and includes 16 bits |
| Start time (StartTime) | Indicates the start time of the second slot included in the second slice, and includes 16 bits |
| Size (GrantSize)/End time (Endtime) | Indicates the size/end time of the second slot included in the second slice, and includes 16 bits |

Based on Table 2, the identifier of the second slice included in the second indication information may be represented by using 16 bits, the start time of the second slot may be represented by using 16 bits, and the size of the second slot or the end time of the second slot may be represented by using 16 bits. It may be understood that quantities of bits, in the OMCI message, that are occupied by the identifier of the second slice, the start time of the second slot included in the second slice, and the size/end time of the second slot that are included in the second indication information and that are provided in Table 2 are merely examples. This is not limited in this application. It should be noted that definitions in the fifth row to the seventh row in Table 2 may be different in different OMCI messages.

In a possible implementation, whether the manner 1 or the manner 2 in the case 1 is specifically used or the case 3 is specifically used may be pre-agreed on by the OLT and the ONU, or may be negotiated by the OLT and the ONU, or there may be another possible manner. This is not limited in this application.

A length of the BWmap and a length of the PLOAMd message carried in the first subframe header are variable. Therefore, a sum of the length of the BWmap and the length of the PLOAMd message may exceed a preset length. If the sum of the length of the PLOAMd message and the length of the BWmap is greater than the preset length, the PLOAMd message and/or the BWmap are/is fragmented and carried in a first slice included in a first subframe and a first slice included in a second subframe, the first subframe is one of the m subframes, and the second subframe is adjacent to the first subframe. The preset length may be specified in a protocol. It may be understood that the quantity m of subframes included in one frame is determined, and a length of the frame is fixed. Therefore, a length of one subframe is also fixed. Further, bandwidth of the second slice included in the frame may dynamically change, and therefore the preset length may also dynamically change.

Further, optionally, the first subframe is a 1^{st} subframe in the m subframes, and the second subframe is a 2^{nd} subframe in the m subframes. Specifically, if the sum of the length of the PLOAMd message and the length of the BWmap is greater than the preset length, the PLOAMd message and/or the BWmap are/is fragmented (or referred to as "fragmented") and carried in the first slice included in the 1^{st} subframe and the first slice included in the 2^{nd} subframe. A sum of a length of a PLOAMd message and a length of a BWmap that are carried in the first slice included in the first subframe is equal to the preset length, and a sum of a length of a PLOAMd message and a length of a BWmap that are carried in the first slice included in the second subframe is less than or equal to the preset length. This may be understood as that when being segmented, the BWmap and the PLOAMd message are preferentially carried in a subframe header in a former subframe.

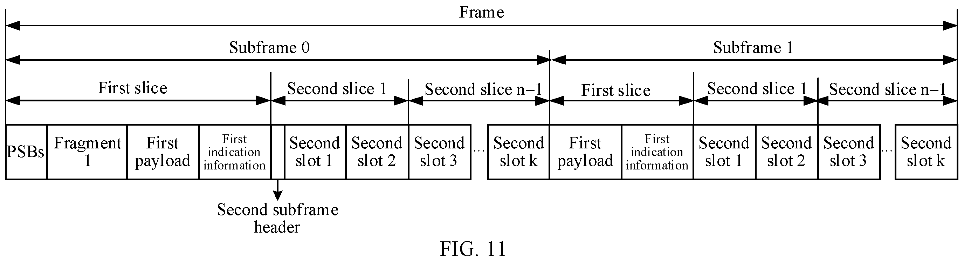

With reference to FIG. 11, one frame includes two subframes: a subframe 0 and a subframe 1, the BWmap and the PLOAMd message are segmented into a fragment 1 and a fragment 2, the fragment 1 is carried in a first slice included in a 1^{st} subframe, the fragment 2 is carried in a first slice included in a 2^{nd} subframe, a length of the fragment 1 is equal to the preset length, and a length of the fragment 2 is less than or equal to the preset length. With reference to FIG. 2, for example, a size (or referred to as bandwidth) of each subframe is 8KB, total bandwidth of n-1 second slices included in the subframe 0 is 6KB bytes, an Hlend is equal to 4B, and the preset length is 8KB-6KB-4B=2K×1024-4B=2044B. If the sum of the length of the BWmap and the length of the PLOAMd message is 3KB, because 3KB is greater than the preset length 2044B, the BWmap and the PLOAMd message are segmented into two fragments: the fragment 1 and the fragment 2, the fragment 1 is carried in a first subframe header in the subframe 0, and the fragment 2 is carried in a first subframe header in the subframe 1. The length of the fragment 1 is 2044B, and the length of the fragment 2 is 1028B.

The first subframe header is fragmented and carried, so that a case in which the BWmap and the PLOAM message cannot be completely placed in a subframe header can be avoided, and the first packet and/or the second packet can be sent without a need to wait until the first subframe header is completely sent, to reduce a delay variation caused by the first subframe header and help reduce a transmission delay of the first subframe header for data of a real-time service such as a private line service.

In a possible implementation, the first slice further includes a frame header, and the frame header is a downstream physical synchronization block (downstream physical synchronization block, PSBd), as shown in FIG. 11.

### 2. Second slice

In a possible implementation, quantities of second slots included in different second slices in a same subframe may be the same or may be different. Specifically, the quantity of second slots included in the second slice may be determined based on a bandwidth size of the second slice configured by the ONT. For example, if bandwidth of a second slice configured by the OLT for a bank is 500 megabits per second (Mbps), bandwidth of a second slice configured for a transportation bureau is 100 Mbps, and bandwidth corresponding to one second slot is 10 Mbps, the second slice configured for the bank includes 500 Mbps/10 Mbps=50 second slots, and the second slice configured for the transportation bureau includes 100 Mbps/10 Mbps=10 second slots. Further, optionally, h is an integer greater than 1, and the h second slots included in the second slice may be consecutive slots, as shown in FIG. 7a, or may be inconsecutive slots, as shown in FIG. 7b.

During cross-frame transmission, the second packet may be separated, to avoid a case in which data recovery and reassembly of a second slice in a subsequent subframe are affected because a bit error occurs and a current subframe cannot be recovered. A 1^{st} second slice in the 1^{st} subframe in the m subframes is further used to carry a second subframe header. In other words, the second subframe header may be added to a start slot in the 1^{st} second slice in the 1^{st} subframe (which may be referred to as a subframe 0) in the m subframes for encapsulation, as shown in FIG. 11.

It should be noted that only one second subframe header is required for second packets carried in a same second slice. For example, a second slice a includes a second slot 1 distributed in each of the m subframes, and only one second subframe header needs to be added to the 1^{st} second slice in the 1^{st} subframe in the m subframes for second packets carried in the m second slots 1 included in the second slice a.

In a possible implementation, the OLT generates a data frame with a frame structure shown in FIG. 11, and sends the data frame to the ONT. Correspondingly, the ONT parses the received data frame. An ONT that does not support the second slice may determine a start location of each frame by using a PSBs, and may learn, in advance, that one frame includes m subframes. Further, when it is determined that the first slice in the first subframe does not include the first indication information, only the first packet transmitted in the first slot needs to be received, and the first packet needs to be processed. In this way, compatibility with the existing ONT can be implemented. An ONT that supports second slice processing may determine a start location of each frame by using a PSBs, and may learn, in advance, that one frame includes m subframes. Further, the first indication information and the second indication information that are included in the first slice in the first subframe are parsed, to determine n-1 second slices and a second slot included in each second slice. The ONT may determine, based on a second slice to which the ONT belongs, a second slot included in the second slice to which the ONT belongs, obtain a second packet in the second slot included in the second slice to which the ONT belongs, recover and process the received second packet, and the like.

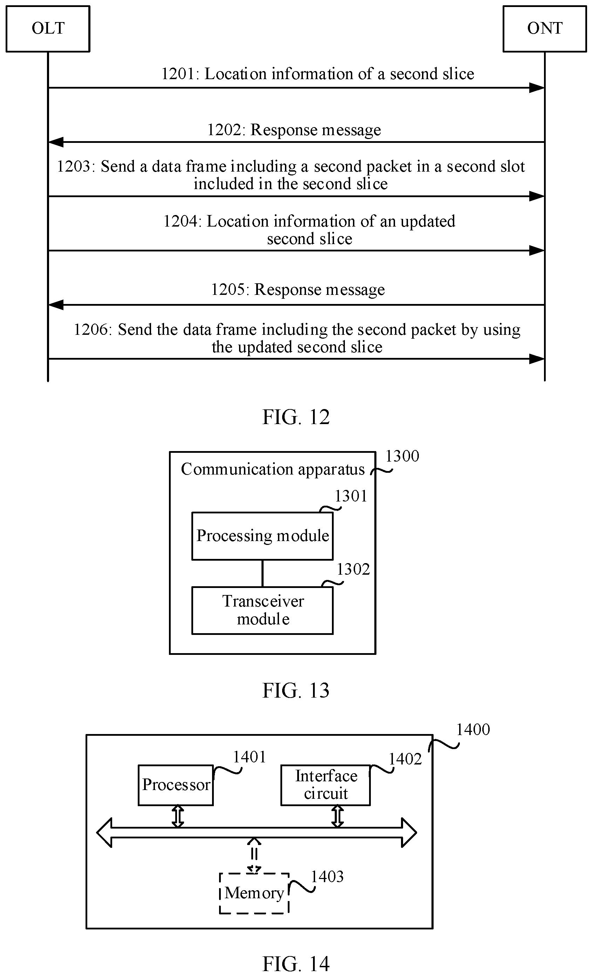

In a possible implementation, after the OLT and the ONT go online, the OLT and the ONT need to negotiate location information of the second slice to which the ONT belongs, a frame number to be enabled for the second slice, and the like. FIG. 12 is a schematic flowchart of a method for negotiating, by an OLT and an ONT, location information of a second slice and a frame number to be enabled for the second slice according to this application. The OLT may be the optical head end in FIG. 1, and the ONT may be any one of the optical terminal 1, the optical terminal 2, ..., and the optical terminal n in FIG. 1. The method includes the following steps.

Step 1201: The OLT sends the location information of the second slice to the ONT. Correspondingly, the ONT receives the location information of the second slice from the OLT.

Specifically, the OLT may send the location information of the second slice that belongs to the ONT to the ONT by using a PLOAM message or an OMCI message. The location information of the second slice includes but is not limited to a start time and an end time of each of h inconsecutive second slots included in the second slice, a start time and size information of each of h inconsecutive second slots, a start time of a 1^{st} second slot and an end time of an h^{th} second slot (that is, a last second slot) that are in h consecutive second slots, or a start time of a 1^{st} second slot in h consecutive second slots and size information of the second slice. Because different second slices may carry service data of different ONTs, the OLT notifies each ONT of location information of a corresponding second slice, so that each ONT extracts service data from the second slice corresponding to the ONT.

Step 1202: The ONT sends a response message to the OLT. Correspondingly, the OLT receives the response message from the ONT.

The response message may be but is not limited to an acknowledgement (ACK) response, to acknowledge that the location information of the second slice is received.

The process of step 1201 and step 1202 may also be understood as a process in which the OLT configures the second slice for the ONT.

Step 1203: The OLT sends a data frame including a second packet to the ONT in the second slot included in the second slice. Correspondingly, the ONT receives the data frame including the second packet in the second slot included in the corresponding second slice.

When bandwidth of a service needs to be adjusted (for example, increased or decreased), the OLT may reconfigure the second slice for the ONT. Specifically, the following step 1204 and step 1205 may be performed.

Step 1204: The OLT sends location information of an updated second slice to the ONT. Correspondingly, the ONT receives the location information of the updated second slice from the OLT.

Specifically, the OLT may send the location information of the updated second slice to the ONT by using a PLOAM message or an OMCI message. For example, the second slice in step 1201 is a second slice i, and the updated second slice may be, for example, a second slice i+j, where both i and j are positive integers.

Step 1205: The ONT sends a response message to the OLT. Correspondingly, the OLT receives the response message from the ONT.

For step 1205, refer to the descriptions of step 1202. Details are not described herein.

Step 1206: The OLT sends the data frame including the second packet to the ONT in a second slot included in the updated second slice. Correspondingly, the ONT receives the data frame including the second packet in the second slot included in the corresponding updated second slice.

Specifically, the OLT may send the data frame including the second packet in a second slot included in the second slice i+j.

Based on step 1201 to step 1206, the ONT may obtain the second packet sent by the OLT.

It may be understood that to implement the functions in the foregoing embodiments, the optical head end and the optical terminal each include a corresponding hardware structure and/or a corresponding software module for performing each function. A person skilled in the art should be easily aware that in this application, the example units and method steps described with reference to embodiments disclosed in this application can be implemented by hardware or a combination of hardware and computer software. Whether a function is performed by hardware or hardware driven by computer software depends on particular application scenarios and design constraints of the technical solutions.

FIG. 13 and FIG. 14 each are a schematic diagram of a structure of a possible communication apparatus according to an embodiment of this application. The communication apparatus may be configured to implement a function of the optical terminal or the optical head end in the foregoing method embodiments, and therefore can also achieve beneficial effects of the foregoing method embodiments. In this embodiment of this application, the communication apparatus may be the optical terminal shown in FIG. 1, may be the optical head end shown in FIG. 1, or may be a module (for example, a chip) used in the optical terminal or the optical head end.

As shown in FIG. 13, a communication apparatus 1300 includes a processing module 1301 and a transceiver module 1302. The communication apparatus 1300 is configured to implement a function of the optical terminal or the optical head end in the method embodiment shown in FIG. 3 or FIG. 12.

When the communication apparatus 1300 is configured to implement the function of the optical head end in the method embodiment shown in FIG. 3, the processing module 1301 is configured to generate a data frame based on a frame structure, where one frame in the frame structure includes m subframes, one subframe includes n slices, a 1^{st} slice in the n slices is a first slice, a slice other than the first slice in the n slices is a second slice, the first slice includes a first slot, the second slice includes at least one second slot, the second slot has a fixed location and size in the frame structure, m is a positive integer, and n is an integer greater than 1; and the transceiver module 1302 is configured to send the data frame to an optical terminal.

More detailed descriptions of the processing module 1301 and the transceiver module 1302 may be directly obtained with direct reference to the related descriptions in the method embodiment shown in FIG. 3. Details are not described herein.

As shown in FIG. 14, a communication apparatus 1400 includes a processor 1401 and an interface circuit 1402. The processor 1401 and the interface circuit 1402 are coupled to each other. It may be understood that the interface circuit 1402 may be a transceiver or an input/output interface. Optionally, the communication apparatus 1400 may further include a memory 1403, configured to store instructions to be executed by the processor 1401, store input data required by the processor 1401 to run instructions, or store data generated after the processor 1401 runs instructions.

When the communication apparatus 1400 is configured to implement the method shown in FIG. 12, the processor 1401 is configured to implement a function of the processing module 1301, and the interface circuit 1402 is configured to implement a function of the transceiver module 1302.

When the communication apparatus is a chip used in the optical terminal, the chip in the optical terminal implements a function of the optical terminal in the foregoing method embodiments. The chip in the optical terminal receives information from another module in the optical terminal, where the information is sent by an optical head end to the optical terminal. Alternatively, the chip in the optical terminal sends information to another module in the optical terminal, where the information is sent by the optical terminal to an optical head end.

When the communication apparatus is a module used in the optical head end, the module in the optical head end implements a function of the optical head end in the foregoing method embodiments. The module in the optical head end receives information from another module in the optical head end, where the information is sent by an optical terminal to the optical head end. Alternatively, the module in the optical head end sends information to another module in the optical head end, where the information is sent by the optical head end to an optical terminal.

It may be understood that the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in an optical head end or an optical terminal. Certainly, the processor and the storage medium may alternatively exist in an optical head end or an optical terminal as discrete components.

All or some of the foregoing embodiments may be implemented by using software, hardware, firmware, or any combination thereof. When software is used for implementation, all or some of the foregoing embodiments may be implemented in a form of a computer program product. The computer program product includes one or more computer programs or instructions. When the computer program or the instructions are loaded and executed on a computer, all or some of the procedures or functions in embodiments of this application are performed. The computer may be a general-purpose computer, a dedicated computer, a computer network, an optical terminal, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, into which one or more usable media are integrated. The usable medium may be a magnetic medium, for example, a floppy disk, a hard disk, or a magnetic tape; may be an optical medium, for example, a digital video disc; or may be a semiconductor medium, for example, a solid state drive. The computer-readable storage medium may be a volatile or nonvolatile storage medium, or may include two types of storage media: a volatile storage medium and a nonvolatile storage medium.

In various embodiments of this application, unless otherwise stated or there is a logic conflict, terms and/or descriptions in different embodiments are consistent and may be mutually referenced, and technical features in the different embodiments may be combined based on an internal logical relationship between the technical features, to form a new embodiment.

In this application, "and/or" describes an association relationship between associated objects, and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between associated objects. In a formula in this application, the character "/" indicates a "division" relationship between associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A data transmission method, comprising:
generating, by an optical head end, a data frame based on a frame structure, wherein one frame in the frame structure comprises m subframes, one subframe comprises n slices, a 1^{st} slice in the n slices is a first slice, a slice other than the first slice in the n slices is a second slice, the first slice comprises a first slot, the second slice comprises at least one second slot, the second slot has a fixed location and size in the frame structure, m is a positive integer, and n is an integer greater than 1; and
sending, by the optical head end, the data frame to an optical terminal.

2. The method according to claim 1, wherein the second slice comprises h second slots, the h second slots are consecutive slots or inconsecutive slots, and h is an integer greater than 1.

3. The method according to claim 1 or 2, wherein the first slice is used to carry first indication information, and the first indication information is used to separate the first slice from the second slice.

4. The method according to claim 3, wherein the first indication information is carried at a tail of the first slice.

5. The method according to claim 3 or 4, wherein the first indication information comprises a gigabit-capable passive optical network encapsulation method GEM header in which a port identifier is a first preset value, or comprises a 10-gigabit-capable passive optical network encapsulation method XGEM header in which a port identifier is a second preset value.

6. The method according to any one of claims 2 to 5, wherein the first slice is further used to carry second indication information, and the second indication information indicates location information of the second slice.

7. The method according to claim 6, wherein h is an integer greater than 1; and
if the second slice comprises h inconsecutive second slots, the second indication information comprises an identifier of the second slice and a start time and an end time of each of the h second slots; or the second indication information comprises an identifier of the second slice and a start time and size information of each of the h second slots; or
if the second slice comprises h consecutive second slots, the second indication information comprises an identifier of the second slice, a start time of a 1^{st} second slot in the h second slots, and an end time of an h^{th} second slot in the h second slots; or the second indication information comprises an identifier of the second slice, a start time of a 1^{st} second slot in the h second slots comprised in the second slice, and size information of the second slice.

8. The method according to claim 6 or 7, wherein the first slice is further used to carry a first subframe header, and the first subframe header comprises a physical layer operations, administration and maintenance downstream PLOAMd message or a bandwidth map BWmap; and
the PLOAMd message or the BWmap carries the second indication information.

9. The method according to claim 8, wherein if a sum of a length of the PLOAMd message and a length of the BWmap is greater than a preset length, the PLOAMd message and/or the BWmap are/is fragmented and carried in a first slice comprised in a first subframe and a first slice comprised in a second subframe, the first subframe is one of the m subframes, and the second subframe is adjacent to the first subframe.

10. The method according to claim 9, wherein the first subframe is a 1^{st} subframe in the m subframes, and the second subframe is a 2^{nd} subframe in the m second subframes.

11. The method according to claim 6 or 7, wherein the first slice is further used to carry a first payload, and the first payload comprises an optical network unit management and control interface OMCI message; and
the OMCI message carries the second indication information.

12. The method according to any one of claims 1 to **11,** wherein a 1^{st} second slice in the 1^{st} subframe in the m subframes is further used to carry a second subframe header.

13. A communication apparatus, comprising a module configured to perform the method according to any one of claims 1 to 12.

14. A communication apparatus, comprising a processor and an interface circuit, wherein the interface circuit is configured to: receive a signal from a communication apparatus other than the communication apparatus, and transmit the signal to the processor, or send a signal from the processor to a communication apparatus other than the communication apparatus, and the processor is configured to implement the method according to any one of claims 1 to 12 through a logic circuit or by executing code instructions.

15. A computer-readable storage medium, wherein the storage medium stores a computer program or instructions, and when the computer program or the instructions are executed by a communication apparatus, the method according to any one of claims 1 to 12 is implemented.
